# FASCICULE DE BREVET EUROPEEN

(11) **EP 2 144 798 B1**
(45) Date de publication et mention de la délivrance du brevet: **29.06.2011**
(21) Numéro de dépôt: 08805675.9
(22) Date de dépôt: 22.04.2008
(51) Int. Cl.: B60W 10/18, B60W 10/20, B62D 6/00, B60T 8/1764, B62D 7/15

(54) **PROCEDE ET DISPOSITIF DE GESTION D'UNE CONSIGNE DE BRAQUAGE APPLIQUEE A AU MOINS UN ACTIONNEUR DE BRAQUAGE DES ROUES ARRIERE D'UN VEHICULE AUTOMOBILE**
VERFAHREN UND VORRICHTUNG ZUR VERWALTUNG EINES EINGESTELLTEN DREHPUNKTES MINDESTENS EINES DREHAKTUATORS FÜR DIE HINTERRÄDER EINES AUTOMOBILS
METHOD AND DEVICE FOR MANAGING A TURNING SETPOINT APPLIED TO AT LEAST ONE TURNING ACTUATOR FOR THE REAR WHEELS OF AN AUTOMOBILE

(30) Priorité: 14.05.2007 FR 0755064
(43) Date de publication de la demande: 20.01.2010
(73) Titulaire: Renault S.A.S., 92100 Boulogne-Billancourt (FR)
(72) Inventeur: CHASSAGNOL, Cédric, F-92300 Levallois-perret (FR); GUEGAN, Stéphane, F-78000 Versailles (FR)
(86) Numéro de dépôt international: PCT/FR2008/050717
(87) Numéro de publication internationale: WO 2008/148965

(56) Documents cités:
- WO-A-2006/067340
- DE-A1- 10 053 604
- FR-A- 2 876 339
- US-A1- 2002 198 646
- US-A1- 2005 275 283

## Description

### DOMAINE TECHNIQUE

L'invention se rapporte au domaine des systèmes de commande de braquage d'un véhicule automobile à quatre roues directrices. De tels systèmes peuvent être couplés à un système freinage permettant de compenser le couple de lacet créé par un freinage avec adhérence asymétrique également appelée freinage «MuSplit». Le système de commande des quatre roues directrices comporte en outre une unité de commande de braquage des roues arrière du véhicule désignée par le terme de « calculateur 4RD », qui compense le couple de lacet en braquant les roues arrière du véhicule d'un angle adéquat. Cet angle est calculé par un algorithme dans le calculateur de freinage appelé « calculateur ESP ». L'angle est ensuite transmis au calculateur 4RD.

### ART ANTERIEUR

De façon générale, et tel que décrit dans le document FR-2 876 339, il est connu d'utiliser dans un véhicule automobile à la fois un calculateur 4RD et un calculateur ESP de manière à compenser un freinage MuSplit.

Cependant, dans les calculateurs 4RD connus, les algorithmes qui permettent de calculer l'angle de braquage en situation de freinage avec adhérence asymétrique, ne permettent pas de garantir un freinage optimum du véhicule puisque, d'une part, une information de commande de braquage peut être erronée, et d'autre part, le calculateur ESP peut commander un freinage entraînant un couple de lacet trop élevé que l'angle de braquage des roues arrière ne serait pas en mesure de compenser.

Ainsi, le but de l'invention est de garantir un freinage optimal d'un véhicule circulant sur une chaussée avec adhérence asymétrique.

### EXPOSE DE L'INVENTION

L'invention concerne donc un procédé de gestion d'une consigne de braquage appliquée à au moins un actionneur de braquage des roues arrière d'un véhicule automobile comportant quatre roues directrices. Une telle consigne de braquage est générée par une unité de commande lors d'une situation de freinage avec adhérence asymétrique.

Par ailleurs, le procédé comprend les étapes consistant à :
- calculer une consigne de braquage intermédiaire des roues arrière par un calculateur ESP d'une unité de commande de freinage permettant de compenser un couple de lacet généré par le freinage avec adhérence asymétrique des quatre roues,
- transmettre la consigne de braquage intermédiaire à l'actionneur de braquage des roues arrière.

Selon l'invention, le procédé se caractérise en ce qu'il comprend les étapes consistant à,
- surveiller la valeur de ladite consigne de braquage intermédiaire au moyen d'un module d'acceptation,
- transmettre à une unité de commande de freinage une information générée par le module d'acceptation de la consigne de braquage intermédiaire, cette information étant, soit la consigne de braquage en sortie de l'unité de commande de braquage (14), soit une valeur invalide.

Autrement dit, une telle surveillance de la consigne de braquage limite les risques d'utilisation d'une consigne de braquage erronée par l'unité de commande de braquage qu'est le calculateur 4RD. Il est de plus possible d'optimiser le freinage du véhicule en ne freinant les roues à forte adhérence, uniquement si le calculateur 4RD est en mesure de compenser le couple de lacet qui serait engendré par un tel freinage. Un tel procédé permet ainsi d'adopter la stratégie de freinage la plus sûre pour le conducteur du véhicule et la plus adaptée à la situation pour réduire la distance de freinage et éviter un tête à queue du véhicule.

En pratique, la consigne de braquage intermédiaire peut être calculée par l'unité de commande de freinage. En d'autres termes, la consigne de braquage intermédiaire est calculée par le calculateur ESP.

Avantageusement, l'étape de surveillance de la valeur de consigne de braquage intermédiaire peut être réalisée dans une unité de commande de braquage des roues arrière.

Ainsi, après avoir été calculée, la consigne de braquage intermédiaire est transmise au calculateur 4RD qui permet de surveiller la valeur de cette consigne de braquage intermédiaire. Le module d'acceptation est donc intégré à l'intérieur du calculateur 4RD.

En d'autres termes, le calculateur ESP permet à la fois de déterminer la consigne de freinage à appliquer aux roues du véhicule, mais également de générer la consigne de braquage intermédiaire pour compenser un couple de lacet généré par le freinage avec adhérence asymétrique des roues.

Par ailleurs, la transmission de l'information générée par le module d'acceptation peut être réalisée lorsque certains paramètres sont détectés et transmis au calculateur 4RD. Pour cela, de nombreux capteurs peuvent être utilisés et sont connectés au calculateur 4RD.

Selon un premier mode de réalisation, l'information peut être transmise à l'unité de freinage lorsqu'un organe de commande de freinage est actionné par le conducteur du véhicule.

Ainsi, un capteur peut être associé au circuit hydraulique piloté par la pédale de frein du véhicule et permet d'informer le calculateur 4RD et le calculateur ESP que cet organe est actionné. Dans ce cas, le calculateur 4RD accepte d'appliquer la consigne de braquage intermédiaire et en avertit le calculateur ESP.

Selon un second mode de réalisation, une information peut être transmise à l'unité de commande de braquage lorsqu'un système d'assistance au freinage est activé.

Dans ce cas, le procédé de gestion de la consigne de freinage est utilisé uniquement lors d'un freinage avec assistance permettant d'éviter le blocage des roues. Lorsque ce système d'assistance est utilisé, le calculateur ESP en informe le calculateur 4RD qui va accepter la consigne de braquage intermédiaire.

Selon un troisième mode de réalisation, l'information peut être transmise à l'unité de commande de braquage et de freinage lorsque le véhicule circule en marche avant.

De cette manière, le procédé n'est pas utilisé lorsque le véhicule circule en marche arrière. Pour ce faire, un capteur peut être notamment positionné au niveau de la boite de vitesses d'un arbre de transmission ou des roues du véhicule.

Selon un quatrième mode de réalisation, l'information peut être transmise à l'unité de commande de freinage lorsqu'une communication est établie entre l'unité de commande de freinage et l'unité de commande de braquage des roues arrière. Dans ce cas, on évite de calculer la consigne intermédiaire de braquage lorsque notamment le freinage n'est plus de type asymétrique.

Selon un mode de réalisation particulier, la communication peut être réalisée au moyen d'un signal incrémental. Un tel signal peut se présenter sous la forme d'un signal cyclique de type horloge variant de 0 à 15 et incrémenté toutes les dix millisecondes lorsque le calculateur ESP envoie une consigne de braquage intermédiaire au calculateur 4RD.

Avantageusement, ces quatre conditions peuvent être combinées et permettre de réduire le risque d'appliquer une consigne de braquage erronée sur les roues arrière du véhicule lors d'un freinage avec adhérence asymétrique.

L'invention concerne également un dispositif de gestion d'une consigne de braquage appliqué à au moins un actionneur de braquage des roues arrière d'un véhicule automobile comportant quatre roues directrices. La consigne de braquage est générée par une unité de commande de braquage lors d'une situation de freinage avec adhérence asymétrique.

Selon l'invention, le dispositif de gestion se caractérise en ce qu'il comporte un module d'acceptation de la valeur d'une consigne de braquage intermédiaire calculée par le calculateur ESP d'une unité de commande de freinage. Le module d'acceptation est apte à surveiller la valeur de la consigne de braquage intermédiaire et à transmettre à l'unité de commande de freinage, une information qui est, soit la consigne de braquage en sortie de l'unité de commande de braquage, soit une valeur invalide.

En d'autres termes, la valeur de la consigne de braquage intermédiaire est surveillée par le module d'acceptation, ce qui permet de limiter le risque de transmission d'une consigne de braquage erronée à l'actionneur de braquage des roues arrière.

Selon un mode de réalisation particulier, le module d'acceptation de la consigne de braquage intermédiaire peut être intégré dans l'unité de commande de braquage des roues arrière. De cette manière, lorsque les conditions d'acceptation sont validées, le calculateur 4RD peut directement transmettre la consigne de braquage intermédiaire à l'actionneur de braquage permettant d'orienter les roues arrière du véhicule afin de compenser le couple de lacet généré par le freinage avec adhérence asymétrique. Un tel agencement est donc très sensible et réactif.

### DESCRIPTION SOMMAIRE DES FIGURES

La manière de réaliser l'invention ainsi que les avantages qui en découlent, ressortiront bien du mode de réalisation qui suit, donné à titre indicatif mais non limitatif, à l'appui des figures suivantes dans lesquelles :
- la figure 1 est une représentation schématique du procédé de gestion, conforme à l'invention ;
- la figure 2 est une représentation schématique des conditions à respecter pour transmettre l'information permettant d'autoriser l'utilisation d'une consigne de braquage des roues arrière lors d'un freinage sur adhérence asymétrique ;
- la figure 3 est une représentation schématique de la détermination de la valeur de la consigne de braquage intermédiaire réellement appliqué par le 4RD ;
- la figure 4 est une représentation schématique de la détermination de la valeur de la consigne de braquage renvoyée au calculateur ESP.

### MANIERE DE REALISER L'INVENTION

L'invention concerne donc un procédé et un dispositif de gestion d'une consigne de braquage des roues arrière d'un véhicule à quatre roues directrices de manière à compenser le couple de lacet généré lors du freinage avec adhérence asymétrique du véhicule.

Un tel dispositif comprend ainsi un calculateur 4RD 14 qui permet de générer une consigne de braquage 17 des roues arrière du véhicule. Pour ce faire, le calculateur 4RD 14 comporte un premier module de maniabilité et de stabilité prenant en considération différentes informations que sont la vitesse du véhicule, l'angle du volant et la direction de circulation du véhicule.

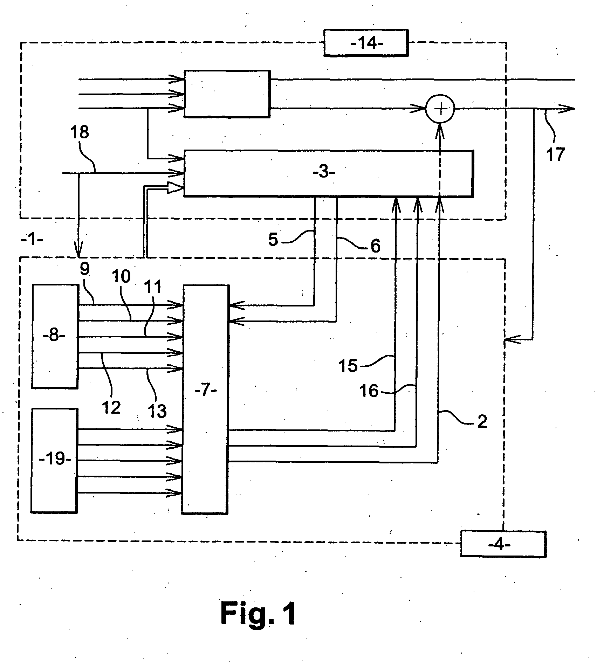

Tel que représenté à la figure 1, un tel calculateur 4RD 14 comporte également un module d'acceptation 3 de la consigne de braquage intermédiaire 2 calculée par le calculateur ESP 4. Un tel module d'acceptation 3 reçoit quant à lui des informations que sont l'activation du freinage par le conducteur du véhicule et l'activation du système d'assistance au freinage. Par ailleurs, le calculateur ESP 4 comporte un module MSC 7 permettant de réaliser un algorithme de calcul de la consigne de braquage intermédiaire 2 pour compenser le couple de lacet lors d'un freinage sur adhérence dissymétrique. Ce module MSC 7 génère quant à lui une information de type cyclique selon une horloge variant de 0 à 15 et incrémentée toutes les dix millisecondes lorsque le calculateur ESP 4 envoie une consigne de braquage intermédiaire 2.

Le module MSC 7 génère également une information de type binaire 15 égale à 0 quand le calculateur ESP 4 n'envoie pas de consigne de braquage intermédiaire 2 et égal à 1 dans le cas inverse.

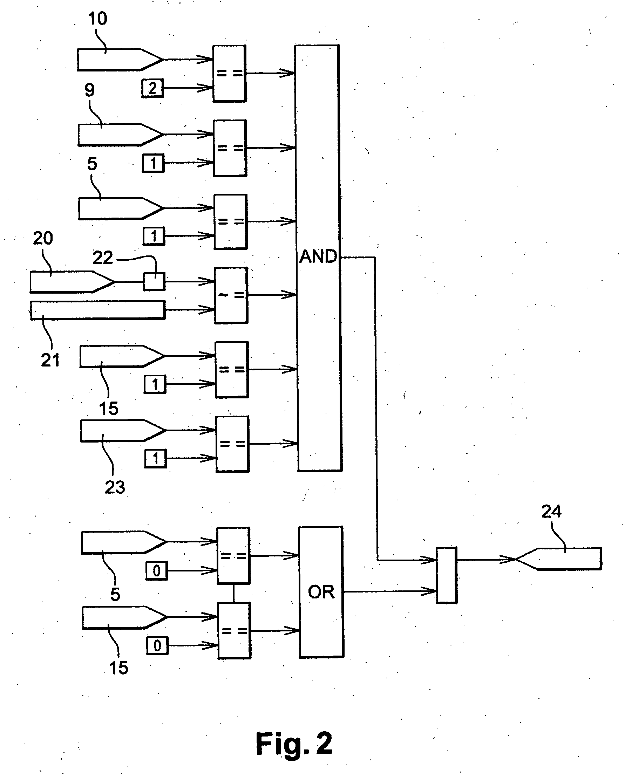

Tel que représenté à la figure 2, pour autoriser le calcul de la consigne de braquage intermédiaire 2, la variable interne 24 doit être levée, c'est-à-dire passer de 0 à 1, à l'instant T. Cet événement est réalisé lorsque toutes les conditions suivantes sont vérifiées :
- le signal 10 représentatif de l'actionnement de l'organe de freinage doit être égal à la valeur 2, ce qui correspond à une pression dans le maître cylindre supérieure à 6 bars ;
- le signal 9 qui correspond à la régulation de systèmes d'assistance au freinage doit être égal à 1, ce qui correspond à une régulation ABS en cours d'utilisation ;
- le signal 5 représentatif de la communication entre le calculateur 4RD 14 et le calculateur ESP 4, doit être égal à 1, ce qui est le cas lorsque aucun problème de communication n'est détecté entre ces deux calculateurs.

La surveillance de l'horloge « MuSplit » générant un signal 20 est détectée au moyen d'une unité de calcul de délai 22 et comparée avec un second signal 21. Une période d'échantillonnage T de 10ms est par ailleurs utilisée et une défaillance de l'horloge « MuSplit » peut être détectée si, à un instant t, au moins une des trois conditions suivantes est remplie pendant plus de trois périodes T :
[MuSplitClock(t)-MuSplitClock(t-T)] > 2
[MuSplitClock(t)-MuSplitClock(t-T]<0 et (16+[MuSplitlock(t)-MuSplitClock(t-T)])> 2
MuSplitClock(t) = MuSplitClock(t-T) = MuSplitClock(t-2T).

Par ailleurs, le signal 5 fait office de drapeau dont la valeur est de 1 par défaut, mais elle peut être mise à zéro si au moins une des conditions suivantes est remplie :
- le signal 17 est égal à 3,84 correspondant à une valeur invalide plus de deux fois consécutives ;
- la trame CAN contenant la consigne 17 est absente pendant plus de 40 ms;
- une défaillance de l'horloge MuSplit a été détectée.

Si le drapeau 5 est mis à zéro une fois, il gardera cette valeur jusqu'à la prochaine mise sous tension du véhicule.

Ces surveillances sont actives durant tout le temps de roulage du véhicule, même en dehors des situations de freinage MuSplit. La seule exception concerne les phases de réveil des calculateurs indiqués par la valeur 0 ou 1 de la variable Généric Applicative Diag Enable.

Par ailleurs, le drapeau 24 est mis à zéro à l'instant t si une des deux conditions suivantes est vérifiée :
- l'information générée par le signal 15 est égal à 0 à l'instant t, c'est-à-dire que l'ESP n'envoie pas de signal de braquage ;
- le drapeau 5 est mis à zéro, ce qui est représentatif d'un problème de communication entre le calculateur 4RD 14 et le calculateur ESP 4.

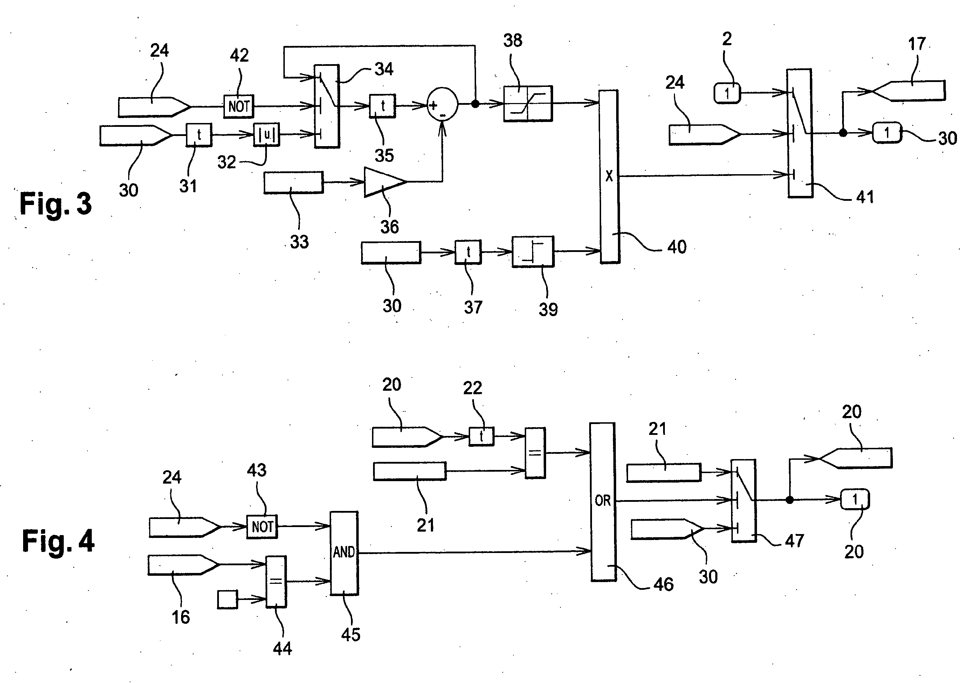

Tel que représenté à la figure 3, la consigne MuSplit réellement prise en compte 17 correspond à la consigne de braquage intermédiaire 2 lorsque le drapeau 24 est égal à 1. Par ailleurs, lorsque le drapeau 24 est égal à 0, alors la consigne MuSplit 17 décroît progressivement jusqu'à 0.

De cette façon, la consigne de braquage intermédiaire 2 en provenance du calculateur ESP 4 n'est acceptée que si le conducteur freine, qu'une régulation ABS est en cours, que le véhicule est en marche avant et que l'horloge MuSplit fonctionne correctement. Cette restriction limite fortement la probabilité d'accepter une consigne de braquage potentiellement erronée.

Tel que représenté à la figure 4, une information 6 est renvoyée au calculateur ESP 4. Cette information 6 est égale à 3,84, ce qui correspond à une valeur invalide si l'une des deux conditions suivantes est vraie :
- le drapeau 24 est égal à zéro et le signal 15 est égal à 1, ce qui correspond au cas où le calculateur ESP 4 envoie une consigne de braquage intermédiaire 2 au calculateur 4RD 14 et qu'un problème de communication est détecté entre les deux calculateurs ;
- la valeur de l'information 6 à l'instant t-1 était égale à 3,84, ce qui correspond à une valeur invalide.

Si aucune des deux conditions ci-dessus est vraie, l'information 6 est égale à la consigne de braquage 17 en sortie du calculateur 4RD 14.

De cette façon, si une consigne de braquage est demandée par le calculateur ESP 4 et refusée par le calculateur 4RD 14, le calculateur ESP 4 est averti par l'information 6 qui est égale à la valeur 3,84.

D'autre part, si une consigne de braquage est refusée une fois, elle l'est pour le reste de la mission, c'est-à-dire jusqu'à la prochaine coupure de contact.

Le calculateur de freinage adapte sa puissance de freinage sur le côté haute adhérence lorsqu'il est averti que le calculateur 4RD 14 n'est pas en état de marche ou que la consigne MuSplit ne sera pas acceptée, c'est-à-dire que l'information 5 est égale à zéro ou que l'information 6 est égale à 3,84.

Il ressort de ce qui précède qu'un procédé et un dispositif conformes à l'invention présentent de nombreux avantages, et notamment :
- ils permettent d'éviter l'utilisation d'une consigne de braquage erronée et les risques d'accident lors d'un freinage MuSplit ;
- ils permettent d'optimiser le freinage de manière à garantir la plus courte distance d'arrêt en cas d'urgence et d'adhérence asymétrique.

## Revendications

1. Procédé de gestion d'une consigne braquage (17) appliquée à au moins un actionneur de braquage des roues arrière d'un véhicule automobile comportant quatre roues directrices, ladite consigne de braquage (17) étant générée par une unité de commande de braquage (14) lors d'une situation de freinage avec adhérence asymétrique, ledit procédé comprenant les étapes consistant à,
- calculer une consigne de braquage intermédiaire (2) des roues arrière par un calculateur ESP d'une unité de commande de freinage permettant de compenser un couple de lacet généré par le freinage avec adhérence asymétrique des quatre roues,
- transmettre ladite consigne de braquage intermédiaire (2) audit au moins un actionneur de braquage desdites roues arrière,
**caractérisé en ce qu'**il comprend les étapes consistant à,
- surveiller la valeur de ladite consigne de braquage intermédiaire au moyen d'un module d'acceptation (3),
- transmettre à une unité de commande de freinage (4) une information (6) générée par le module d'acceptation (3) de la consigne de braquage intermédiaire (2), cette information étant, soit la consigne de braquage en sortie de l'unité de commande de braquage (14), soit une valeur invalide..

2. Procédé de gestion d'une consigne du braquage selon la revendication 1, **caractérisé en ce que** l'étape de surveillance de la valeur de la consigne de braquage intermédiaire (2) est réalisée dans l'unité de commande de braquage (14) des roues arrière.

3. Procédé de gestion d'une consigne du braquage selon la revendication 1, **caractérisé en ce que** la consigne de braquage intermédiaire (2) est calculée par ladite unité de commande de freinage (4).

4. Procédé de gestion d'une consigne du braquage selon la revendication 1, **caractérisé en ce que** ladite information (6) est transmise à l'unité de commande de freinage (4) lorsqu'un organe de commande de freinage est actionné par le conducteur du véhicule.

5. Procédé de gestion d'une consigne du braquage selon la revendication 1, **caractérisé en ce que** ladite information (6) est transmise à l'unité de commande de braquage (14) lorsqu'un système d'assistance au freinage est activé.

6. Procédé de gestion d'une consigne du braquage selon la revendication 1, **caractérisé en ce que** ladite information (6) est transmise aux unités de commande de freinage (4) et de braquage (14) lorsque le véhicule circule en marche avant.

7. Procédé de gestion d'une consigne du braquage selon la revendication 1, **caractérisé en ce que** ladite information (6) est transmise à l'unité de commande de freinage (4) lorsqu'une communication est établie entre l'unité de commande de freinage (4) et l'unité de commande de braquage (14) des roues arrière.

8. Procédé de gestion d'une consigne du braquage selon la revendication 7, **caractérisé en ce que** ladite communication est réalisée au moyen d'un signal incrémental (16).

9. Dispositif de gestion (1) d'une consigne braquage (17) appliquée à au moins un actionneur de braquage des roues arrière d'un véhicule automobile comportant quatre roues directrices, ladite consigne braquage (17) étant générée par une unité de commande de braquage (14) lors d'une situation de freinage avec adhérence asymétrique, ledit dispositif de gestion (1) étant **caractérisé en ce qu'**il comporte un module d'acceptation (3) de la valeur d'une consigne de braquage intermédiaire (2) calculée par le calculateur ESP d'une unité de commande de freinage (4), ledit module d'acceptation (3) étant apte à surveiller la valeur de ladite consigne de braquage intermédiaire (2), et à transmettre à l'unité de commande de freinage (4), une information qui est, soit la consigne de braquage en sortie de l'unité de commande de braquage (14), soit une valeur invalide..

10. Dispositif selon la revendication 9, **caractérisé en ce que** le module d'acceptation (3) de la consigne de braquage intermédiaire (2) est intégré dans l'unité de commande de braquage (14) des roues arrière.

## Claims

1. Method for managing a turning setpoint (17) applied to at least one turning actuator of the rear wheels of a motor vehicle comprising four steering wheels, said turning setpoint (17) being generated by a turning control unit (14) during a braking situation with asymmetrical adhesion, said method comprising the steps consisting in,
- calculating an intermediate turning setpoint (2) of the rear wheels by an ESP computer of a braking control unit making it possible to compensate for a yaw torque generated by the braking with asymmetrical adhesion of the four wheels,
- transmitting said intermediate turning setpoint (2) to said at least one turning actuator of said rear wheels,
**characterized in that** it comprises the steps consisting in,
- monitoring the value of said intermediate turning setpoint by means of an acceptance module (3),
- transmitting to a braking control unit (4) an item of information (6) generated by the acceptance module (3) of the intermediate turning setpoint (2), this item of information being either the turning setpoint at the output of the turning control unit (14), or an invalid value.

2. Method for managing a turning setpoint according to Claim 1, **characterized in that** the step of monitoring the intermediate turning setpoint value (2) is carried out in the turning control unit (14) of the rear wheels.

3. Method for managing a turning setpoint according to Claim 1, **characterized in that** the intermediate turning setpoint (2) is calculated by said braking control unit (4).

4. Method for managing a turning setpoint according to Claim 1, **characterized in that** said item of information (6) is transmitted to the braking control unit (4) when a braking control member is actuated by the driver of the vehicle.

5. Method for managing a turning setpoint according to Claim 1, **characterized in that** said item of information (6) is transmitted to the turning control unit (14) when a braking assistance system is activated.

6. Method for managing a turning setpoint according to Claim 1, **characterized in that** said item of information (6) is transmitted to the braking control unit (4) and turning control unit (14) when the vehicle is travelling forward.

7. Method for managing a turning setpoint according to Claim 1, **characterized in that** said item of information (6) is transmitted to the braking control unit (4) when a communication is established between the braking control unit (4) and the turning control unit (14) of the rear wheels.

8. Method for managing a turning setpoint according to Claim 7, **characterized in that** said communication is carried out by means of an incremental signal (16).

9. Management device (1) of a turning setpoint (17) applied to at least one turning actuator of the rear wheels of a motor vehicle comprising four steering wheels, said turning setpoint (17) being generated by a turning control unit (14) during a braking situation with asymmetrical adhesion, said management device (1) being **characterized in that** it comprises an acceptance module (3) of the value of an intermediate turning setpoint (2) calculated by the ESP computer of a braking control unit (4), said acceptance module (3) being capable of monitoring the value of said intermediate turning setpoint (2), and of transmitting to the braking control unit (4) an item of information that is either the turning setpoint at the output of the turning control unit (14), or an invalid value.

10. Device according to Claim 9, **characterized in that** the acceptance module (3) of the intermediate turning setpoint (2) is incorporated into the turning control unit (14) of the rear wheels.

## Patentansprüche

1. Verfahren zur Verwaltung eines Radeinschlag-Sollwerts (17), der an mindestens ein Radeinschlag-Stellglied der Hinterräder eines Kraftfahrzeugs mit vier gelenkten Rädern angewendet wird, wobei der Radeinschlag-Sollwert (17) von einer Radeinschlag-Steuereinheit (14) in einer Bremssituation mit asymmetrischer Haftung erzeugt wird, wobei das Verfahren Schritte enthält, die darin bestehen
- einen Radeinschlag-Zwischensollwert (2) der Hinterräder durch einen ESP-Rechner einer Bremssteuereinheit zu berechnen, der es ermöglicht, ein Giermoment zu kompensieren, das durch das Bremsen mit asymmetrischer Haftung der vier Räder erzeugt wird,
- den Radeinschlag-Zwischensollwert (2) an das mindestens eine Radeinschlag-Stellglied der Hinterräder zu übertragen,
**dadurch gekennzeichnet, dass** es die Schritte enthält, die darin bestehen
- den Wert des Radeinschlag-Zwischensollwerts mittels eines Akzeptanzmoduls (3) zu überwachen,
- an eine Bremssteuereinheit (4) eine Information (6) zu übertragen, die vom Akzeptanzmodul (3) des Radeinschlag-Zwischensollwerts (2) erzeugt wird, wobei diese Information entweder der Radeinschlag-Sollwert am Ausgang der Radeinschlag-Steuereinheit (14) oder ein ungültiger Wert ist.

2. Verfahren zur Verwaltung eines Radeinschlag-Sollwerts nach Anspruch 1, **dadurch gekennzeichnet, dass** der Schritt der Überwachung des Werts des Radeinschlag-Zwischensollwerts (2) in der Radeinschlag-Steuereinheit (14) der Hinterräder durchgeführt wird.

3. Verfahren zur Verwaltung eines Radeinschlag-Sollwerts nach Anspruch 1, **dadurch gekennzeichnet, dass** der Radeinschlag-Zwischensollwert (2) von der Bremssteuereinheit (4) berechnet wird.

4. Verfahren zur Verwaltung eines Radeinschlag-Sollwerts nach Anspruch 1, **dadurch gekennzeichnet, dass** die Information (6) an die Bremssteuereinheit (4) übertragen wird, wenn ein Bremssteuerorgan vom Fahrer des Fahrzeugs betätigt wird.

5. Verfahren zur Verwaltung eines Radeinschlag-Sollwerts nach Anspruch 1, **dadurch gekennzeichnet, dass** die Information (6) an die Radeinschlag-Steuereinheit (14) übertragen wird, wenn ein Bremsassistenzsystem aktiviert wird.

6. Verfahren zur Verwaltung eines Radeinschlag-Sollwerts nach Anspruch 1, **dadurch gekennzeichnet, dass** die Information (6) an die Brems- (4) und Radeinschlag-Steuereinheiten (14) übertragen wird, wenn das Fahrzeug im Vorwärtsgang fährt.

7. Verfahren zur Verwaltung eines Radeinschlag-Sollwerts nach Anspruch 1, **dadurch gekennzeichnet, dass** die Information (6) an die Bremssteuereinheit (4) übertragen wird, wenn eine Verbindung zwischen der Bremssteuereinheit (4) und der Radeinschlag-Steuereinheit (14) der Hinterräder aufgebaut wird.

8. Verfahren zur Verwaltung eines Radeinschlag-Sollwerts nach Anspruch 7, **dadurch gekennzeichnet, dass** die Verbindung mittels eines Inkrementalsignals (16) hergestellt wird.

9. Vorrichtung (1) zur Verwaltung eines Radeinschlag-Sollwerts (17), der an mindestens ein Radeinschlag-Stellglied der Hinterräder eines Kraftfahrzeugs mit vier gelenkten Rädern angewendet wird, wobei der Radeinschlag-Sollwert (17) durch eine Radeinschlag-Steuereinheit (14) in einer Situation des Bremsens mit asymmetrischem Haften erzeugt wird, wobei die Verwaltungsvorrichtung (1) **dadurch gekennzeichnet ist, dass** sie ein Akzeptanzmodul (3) des Werts eines Radeinschlag-Zwischensollwerts (2) aufweist, der vom ESP-Rechner einer Bremssteuereinheit (4) berechnet wird, wobei das Akzeptanzmodul (3) den Wert des Radeinschlag-Zwischensollwerts (2) überwachen und an die Bremssteuereinheit (4) eine Information übertragen kann, die entweder der Radeinschlag-Sollwert am Ausgang der Radeinschlag-Steuereinheit (14) oder ein ungültiger Wert ist.

10. Vorrichtung nach Anspruch 9, **dadurch gekennzeichnet, dass** das Akzeptanzmodul (3) des Radeinschlag-Zwischensollwerts (2) in die Radeinschlag-Steuereinheit (14) der Hinterräder integriert ist.
